# EUROPÄISCHE PATENTSCHRIFT

(11) **EP 2 716 924 B1**
(45) Veröffentlichungstag und Bekanntmachung des Hinweises auf die Patenterteilung: **12.12.2018**
(21) Anmeldenummer: 13186859.8
(22) Anmeldetag: 01.10.2013
(51) Int. Cl.: F16C 33/38, F16C 33/66, F16C 19/06, F16C 33/42

(54) **FESTSTOFFGESCHMIERTES WÄLZLAGER**
SOLID LUBRICATED ROLLING BEARING
PALIER À ROULEMENT À LUBRIFICATION SOLIDE

(30) Priorität: 02.10.2012 DE 102012109337
(43) Veröffentlichungstag der Anmeldung: 09.04.2014
(73) Patentinhaber: Josef Blässinger GmbH + Co. KG, 73760 Ostfildern (DE)
(72) Erfinder: Turowski, Peter, 71384 Weinstadt (DE)
(74) Vertreter: Mammel und Maser

(56) Entgegenhaltungen:
- EP-A1- 0 036 692
- EP-A1- 1 475 547
- EP-A2- 0 275 080
- DE-B4- 19 981 108
- FR-A1- 2 580 348
- JP-A- 2009 236 314
- US-A- 4 906 110
- US-A- 5 149 208

## Beschreibung

Die Erfindung betrifft ein feststoffgeschmiertes Wälzlager gemäß dem Oberbegriff des Anspruchs 1.

Wälzlager werden unter normalen Bedingungen üblicherweise mit Fetten oder Ölen geschmiert. Die Schmierung mit Fetten und Ölen kann jedoch in dem Anwendungsbereich nicht erfolgen, in welchem der Schmierstoff infolge chemischer und/oder physikalischer Einwirkungen auf die Schmierstelle seine Schmierwirkung verliert oder die gewünschte Gebrauchsdauer nicht aufweist. Beispiele hierfür sind hohe Betriebstemperaturen von beispielsweise größer 180° oder niedrige Drücke, insbesondere bei Vakuumanwendungen als auch bei Einwirkung von aggressiven Medien.

Zur Vermeidung dieser Nachteile sind bereits Wälzlager bekannt, welche eine Feststoffschmierung als Verbrauchsschmierung aufweisen. Es sind feststoffgeschmierte Wälzlager bekannt, welche einen Käfig mit Wälzkörpertaschen zur Aufnahme von Wälzkörpern umfassen, dessen gesamter, mindestens jedoch überwiegender Teil des freien Lagerraumes mit einer Mischung aus einem Festschmierstoff mit einem Binder gefüllt ist. Diese Lager weisen den Nachteil auf, dass nur der zwischen den Käfigtaschen und Wälzkörpern sowie der direkt an der Laufbahn anliegende eingebrachte Schmierstoff an der Transferschmierung beteiligt ist. Aufgrund des üblicherweise geringen Taschenspiels und der Lagerluft ist nur ein geringer Teil des eingebrachten Schmierstoffes an der Transferschmierung beteiligt und wirksam.

Des Weiteren sind beispielsweise Wälzlager der Firma SKF GmbH des Typs 2Z/VA228 bekannt, bei welchen der Käfig der Wälzlager als Kronenkäfig aus reinem Graphit ausgebildet ist. Ebenso ist von der Firma SKF GmbH ein Wälzlager des Typs 2Z/VA208 bekannt, bei welchem anstelle des aus Graphit ausgebildeten Kronenkäfigs ein Segmentkäfig aus Graphit vorgesehen ist. Diese feststoffgeschmierten Wälzlager weisen den Nachteil auf, dass bei zunehmender Lebensdauer ein Verschleiß an dem Käfig selbst erfolgt, wodurch die Käfige ihre Führungs- und Haltefunktion verlieren können.

Aus der DE 199 81 108 B4 ist ein Wälzlager mit einem Käfig zur Aufnahme von Wälzkörpern bekannt, bei welchem der Käfig aus zwei ringförmigen, pressgeformten Metallplatten zusammengesetzt ist. Diese zusammengesetzten Metallplatten bilden mehrere bogenförmige Taschen, welche jeweils zwei Wälzelemente aufnehmen. Dabei sind jeweils zwei Wälzelemente einer Tasche mittels eines zylinderförmigen Abstandhalters zueinander beabstandet, wobei die Abstandhalter als Feststoff-Schmierkörper ausgebildet sind.

Die JP 2009 236314 A offenbart ein Wälzlager, bei dem die Wälzkörper von einem Käfig gehalten sind, welcher die Wälzkörper in einer Umfangsebene der Wälzkörper vollumfänglich umgreift. Auch bei diesem Wälzlager sind zylinderförmige Schmierstoffsegmente vorgesehen, die sowohl zwischen dem Käfig und der äußeren Lagerschale als auch zwischen dem Käfig und der inneren Lagerschale angeordnet sind.

Aus der EP 1 475 547 A1 ist ein Wälzlager bekannt, bei welchem zylinderförmige Wälzkörper in einer Nut an der äußeren Wälzlagerschale geführt und zusätzlich von einem ringförmigen Käfig in axialer Richtung fixiert werden. Bei diesem Wälzlager sind Schmierstoffsegmente vorgesehen, die als quaderförmige Blöcke in Ausnehmungen an den Lagerschalen eingesetzt sind.

Die US 4 906 110 A und die US 4 906 110 A betreffen ein Wälzlager mit einem Käfig zur Aufnahme von Nadelrollen, bei welchem der Käfig selbst aus einem Material zur Feststoffschmierung ausgebildet ist bzw. der Käfig durch Abstandhalter gebildet ist, die als Schmierstoffsegmente zwischen den Nadelrollen angeordnet sind.

Aus der EP 0 275 080 A2 geht ein Wälzlager mit einem Käfig für die Wälzkörper hervor, welcher durch zwei ringförmige Halteelemente gebildet ist, wobei die beiden Halteelemente stirnseitig miteinander verschraubt werden. Durch das Zusammensetzen der Halteelemente sind mehrere Aufnahmebereiche für die Wälzkörper gebildet. Innerhalb der Halteelemente sind zwischen zwei benachbarten Wälzkörpern quaderförmige Schmierstoffsegmente vorgesehen, die durch Federelemente an die Wälzkörper gedrückt werden.

Die US 4 906 110 A beschreibt ein Wälzlager, bei dem die Wälzkörper durch T-förmige Abstandhalter zueinander beabstandet sind, wobei die Abstandhalter als Schmierstoffsegmente ausgebildet sind. Die Abstandhalter weisen eine konkave Form auf, sodass diese von den Wälzkörpern radial abgestützt werden. An der inneren Lagerschale sind zwei axiale Flansche vorgesehen, welche die Abstandhalter zu beiden Seiten an einem axialen Verrutschen hindern.

Die EP 0 036 692 A1 offenbart ein Wälzlager mit einem ringförmigen Käfig zur Führung der Wälzkörper und zusätzlich einen einteilig ringförmigen Schmierstoffeinsatz zur Schmierung dieser Wälzkörper. Dabei bestehen der Käfig aus einem widerstandsfähigen Kunststoff und der Schmierstoffeinsatz aus einer gelförmigen, ein Schmieröl beinhaltenden Matrix. Der Käfig weist C-förmige Ausnehmungen auf, durch welche die Wälzkörper aufgenommen und geführt sind. Der ringförmige Schmierstoffeinsatz bildet eine U-förmige Kontur mit kugelförmigen Ausschnitten, durch welche Anlageflächen zur Schmierung der Wälzkörper gebildet sind. Der Käfig und der Schmierstoffeinsatz sind sich gegenüberliegend in dem Wälzlager angeordnet, sodass die Wälzkörper dazwischen liegend von den C-förmigen Ausnehmungen des Käfigs und der U-förmigen Kontur des Schmierstoffeinsatzes aufgenommen und gesichert sind.

Der Erfindung liegt die Aufgabe zugrunde, ein feststoffgeschmiertes Wälzlager zu schaffen, welches eine hohe Lebensdauer aufweist und die Führung der Walzkörper sicherstellt.

Diese Aufgabe wird erfindungsgemäß durch das Wälzlager gemäß den Merkmalen des Anspruchs 1 gelöst. Weitere vorteilhafte Ausgestaltungen und Weiterbildungen sind in den weiteren Ansprüchen angegeben.

Durch die Ausgestaltung des Wälzlagers mit dem erfindungsgemäßen Käfig, bei welchem die Schmierstoffsegmente zumindest eine Anlagefläche aufweisen, die den Wälzkörpern zugeordnet sind und der Käfig als Kronenkäfig mit einem U-förmigen Querschnitt ausgebildet ist, der Wälzkörpertaschen für die Wälzkörper aufweist und zwischen den Wälzkörpern in den U-förmigen Querschnitt die Schmierstoffsegmente einsetzbar sind und die Schmierstoffsegmente eine T-förmige Kontur aufweisen, wobei der horizontale Schenkel des T's sich in Umfangsrichtung des Kronenkäfigs erstreckt, wodurch die Schmierstoffsegmente nach dem Einsetzen der Wälzkörper in die Wälzkörpertaschen in der Aufnahme gehalten sind wird ermöglicht, dass bei zunehmendem Verbrauch und Verschleiß das Schmierstoffsegment verschleißt, jedoch die Führungsfunktion des Käfigs für die Wälzkörper, der die Wälzkörper zwangsführt, unbeeinflusst bleibt. Dadurch kann eine hohe Lebensdauer bei gleichzeitiger Feststoffschmierung unter Beibehaltung der Käfigfunktion erzielt werden. Diese Trennung der Funktionen "Führung der Wälzkörper" und "Schmierung des Wälzlagers" ermöglicht des Weiteren, dass die bisherige Konstruktion von Wälzlagern mit deren Käfig weitestgehend aufrecht erhalten bleiben kann und zusätzlich durch Anpassung der Schmierstoffsegmente feststoffgeschmierte Wälzlager geschaffen werden können. Des Weiteren sind in Abhängigkeit der Einsatzfälle in einfacher Weise verschiedene Stoffsegmente einsetzbar, die an den jeweiligen Anwendungsfall beziehungsweise an die Umgebungsbedingungen angepasst sind. Dadurch, dass das Schmierstoffsegment zumindest eine Anlagefläche aufweist, die den Wälzkörpern zugeordnet ist, kann bei dieser Ausführungsform anstelle einer unmittelbaren Schmierung der Lauffläche des Innen- und/oder Außenringes die Wälzkörper geschmiert werden. Es erfolgt also eine Transferschmierung. Dabei bleibt jedoch die Trennung zwischen dem Käfig als verschleißfestes Bauteil und dem Schmierstoffelement als Verschleißteil erhalten. Zudem besteht der Vorteil, dass das bisherige Konstruktionsprinzip des Kronenkäfigs aufrecht erhalten bleiben kann und zusätzlich die Schmierstoffsegmente eingesetzt werden. Bei der T-förmigen Kontur des Schmierstoffsegments ist der vertikale Abschnitt der T-förmigen Kontur vorteilhafterweise zwischen den Wälzkörpern angeordnet und liegt an diesen an. Der horizontale Abschnitt der T-förmigen Kontur ist einem Boden des U-förmigen Querschnitts des Käfigs zugeordnet, sodass dieses Schmierstoffsegment einerseits zwischen den zwei einander zugeordneten Wälzkörpern und andererseits zwischen den Wälzkörpern und dem Kronenkäfig geführt ist.

Bevorzugt liegt der horizontale Abschnitt der T-förmigen Kontur des Schmierstoffsegments ebenfalls an dem Wälzkörper an. Dadurch kann eine erhöhte Schmierung erfolgen. Vorzugsweise ist zwischen dem horizontalen und vertikalen Abschnitt der T-förmig ausgebildeten Schmierstoffsegmente ein Übergangsbereich geschaffen, der an die Kontur des Wälzkörpers angepasst ist, so dass noch eine weitere Erhöhung der Schmierung ermöglicht ist.

Eine bevorzugte Ausführungsform sieht vor, dass in jedem Aufnahmebereich zumindest ein Schmierstoffsegment angeordnet ist. Dadurch kann eine optimale Schmierstoffversorgung für eine hohe Lebensdauer geschaffen sein.

Die Schmierstoffsegmente für die feststoffgeschmierten Wälzlager bestehen bevorzugt aus einem Trockenschmierstoff, wie beispielsweise Graphit oder MoS₂.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine perspektivische Ansicht im Teilschnitt eines Wälzlagers,
- Figur 2: eine perspektivische Ansicht im Teilschnitt einer zweiten alternativen Ausführungsform zu Figur 1 und
- Figur 3: eine perspektivische Ansicht im Teilschnitt einer dritten alternativen Ausführungsform zu Figur 1.

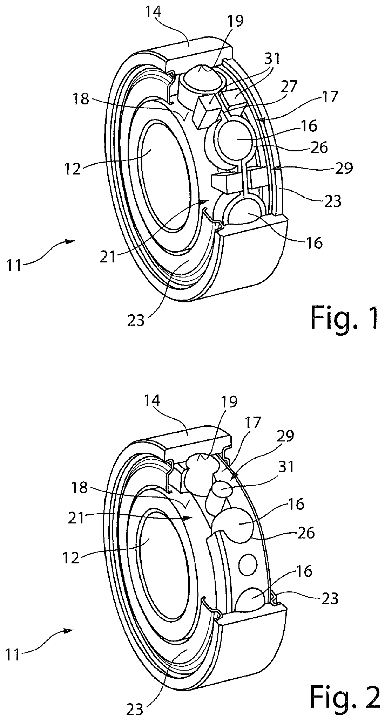

In Figur 1 ist perspektivisch im Teilschnitt ein nicht zur Erfindung gehörendes Wälzlager 11 dargestellt, welches als feststoffgeschmiertes Wälzlager 11 ausgebildet ist. Dieses Wälzlager 11 ist beispielsweise als Rollenkugellager dargestellt. Die nachfolgenden Ausführungen gelten jedoch für jegliche Ausführungsformen von Wälzlagern, wie beispielsweise Zylinder-, Ku-gel-, Kegel-, Nadellager oder dergleichen.

Das Wälzlager 11 umfasst einen Innenring 12, einen Außenring 14 sowie eine Vielzahl von kugelförmigen Wälzkörpern 16, die in einem Käfig 17 geführt sind. Der Außen- und Innenring 12, 14 weisen jeweils eine Lauffläche 18, 19 auf. Die Wälzkörper 16, die in einen Wälzkörperraum 21 radial zwischen dem Innenring 12 und Außenring 14 angeordnet sind, wälzen sich auf den Laufflächen 18, 19 ab. Die Wälzkörper 16 werden durch den Käfig 17 in Umfangsrichtung relativ zueinander auf Abstand gehalten. Zwischen dem Innenring 12 und Außenring 14 sind beispielsweise zwei Deckscheiben 23 vorgesehen, durch welche das Wälzlager 11 abgedichtet ist, um das Wälzlager 11 vor dem Zutritt von festen Verunreinigungen zu schützen.

Der Käfig 17 ist als Segmentkäfig ausgebildet und weist Wälzkörpertaschen 26 auf, in denen die Wälzkörper 16 geführt sind. Dieser Käfig 17 ist beispielsweise als Blechkäfig ausgebildet und weist zwischen den beiden Wälzkörpertaschen 26 Stege 27 auf, durch welche die Wälzkörpertaschen 26 über den Umfang gesehen zueinander beabstandet sind. Zwischen den Wälzkörpertaschen 26 ist ein Aufnahmebereich 29 geschaffen, der zur Anordnung und Positionierung von zumindest einem Schmierstoffsegment 31 dient. Im Ausführungsbeispiel ist der Aufnahmebereich 29 durch den Steg 27 in zwei Bereiche getrennt, so dass in jeden Bereich ein Schmierstoffsegment 31 oder mehrere Schmierstoffsegmente 31 einsetzbar sind. Bei dieser Ausführungsform ist vorgesehen, dass die Deckscheiben 23 den Aufnahmebereich 29 in axialer Richtung begrenzen.

Das Schmierstoffsegment 31 kann stiftförmig ausgebildet sein, wobei die Grundfläche rund, quadratisch, mehreckförmig, oval oder dergleichen ausgebildet sein kann. Insbesondere kann zur Maximierung der Schmierung das Schmierstoffsegment 31 an die Kontur des Aufnahmebereichs 29 angepasst sein. Das Schmierstoffsegment 31 erstreckt sich in seiner Länge bevorzugt von der Lauffläche 18 des Innenrings 12 bis zur Lauffläche 19 des Außenrings 14. Dadurch können sowohl die Lauffläche 18 des Innenrings 12 als auch die Lauffläche 19 des Außenrings 14 geschmiert werden.

Diese Ausführungsform weist den Vorteil auf, dass der Käfig 12, der anstelle aus einem Blechmaterial auch aus anderen verschleißfesten Materialien, aber auch aus einem Kunststoffmaterial, hergestellt sein kann, unabhängig von den Schmierstoffsegmenten 31 in der Materialauswahl ausgebildet werden kann, so dass das Schmierstoffsegment 31 an den jeweiligen Einsatzfall optimal zur Aufrechterhaltung der Schmierung des Wälzlagers 11 abgestimmt werden kann.

In Figur 2 ist eine alternative Ausführungsform zu Figur 1 dargestellt. Der Käfig 17 ist beispielsweise aus einem Kunststoffring gebildet, in welchem die Wälzkörpertaschen 16 eingearbeitet sind. Dazwischen liegend umfasst der als Kunststoffring ausgebildete Käfig 17 Bohrungen, die den Käfig 17 vollständig durchqueren und den Aufnahmebereich 29 bilden, in welchem die Schmierstoffsegmente 31 einsetzbar sind. Im Ausführungsbeispiel ist vorgesehen, dass die Schmierstoffsegmente 31 zylindrisch ausgebildet sind und einen Außenumfang entsprechend der Bohrung des Aufnahmebereichs 29 aufweisen. Bei dieser Ausführungsform sind eine zur Lauffläche 18 weisende Stirnseite sowie eine zur Lauffläche 19 weisende Stirnseite des Schmierstoffsegmentes 31 vorgesehen, die daran anliegen und die jeweilige Lauffläche 18, 19 mit Schmierstoff versorgen können.

Alternativ können diese Schmierstoffsegmente 31 auch T-förmig ausgebildet sein, das heißt, dass ein zylindrischer Abschnitt in den Aufnahmebereich 29 hineinragt und der zweite Schenkel des T's am Außenumfang oder Innenumfang des Käfigs 17 anliegt sowie einen vergrößerten Anlagebereich zur Lauffläche 18, 19 bildet. Alternativ kann auch von der Innenseite und der Außenseite ein solches T-förmig oder pilzkopfförmig ausgebildetes Schmierstoffsegment 31 einsetzbar sein.

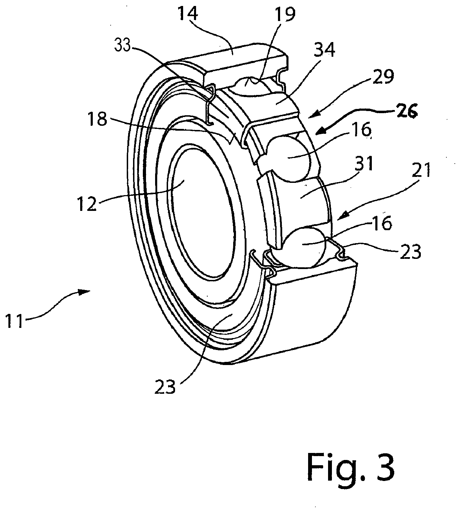

In Figur 3 ist eine erfindungsgemäße Ausführungsform dargestellt. Bei dieser Ausführungsform ist der Käfig 17 als Kronenkäfig ausgebildet, welcher einen U-förmigen Querschnitt aufweist. Dieser Kronenkäfig umfasst einen radial umlaufenden Boden 33, an welchem zwei parallel verlaufende Schenkelabschnitte 34 in axialer Richtung weisend angeformt sind. In diesen Schenkelabschnitten 34 sind Ausnehmungen eingearbeitet, um die Wälzkörpertaschen 26 auszubilden. Die Schmierstoffsegmente 31 sind T-förmig ausgebildet, wobei sich der horizontale Schenkel des T's in Umfangsrichtung erstreckt und dem Boden 33 zugeordnet ist. Zwischen den Wälzkörpern 16 erstreckt sich der vertikale Schenkel des T's, wobei dieser Schenkel derart breit ausgebildet ist, dass die zueinander benachbarten Wälzkörper 16 zur Anlage an dem Schmierstoffsegment 31 gelangen. Durch die Ausgestaltung des horizontal ausgerichteten Schenkels des Schmierstoffsegmentes 31 verbleibt das Schmierstoffsegment 31 nach dem Einsetzen der Wälzkörper 16 in die Wälzkörpertasche 26 selbständig in dem Käfig 17. Die Schmierstoffsegmente 31 sind in Umfangsrichtung gesehen an deren Außen- und Innenseite zumindest teilweise durch die Schenkelabschnitte 34 gehalten und geführt. Im Übergangsbereich der linken Schenkel des T's kann eine an den Durchmesser der Wälzkörper angepasste Kontur vorgesehen sein, so dass zwei benachbart zueinander angeordnete Schmierstoffsegmente 31 eine Art U-förmige Aufnahme für den jeweiligen Wälzkörper 16 bilden.

Bei dieser Ausführungsform ist vorgesehen, dass der Schmierstoff mittels dem Schmierstoffsegment 31 auf die Wälzkörper übertragen wird und dort ein Transfer auf die Lauffläche 18, 19 des Innenrings 12 und Außenrings 14 erfolgt. Es erfolgt somit eine mittelbare Schmierung der Lauffläche. Bei den zuvor beschriebenen Ausführungsformen gemäß den Figuren 1 und 2 erfolgt eine unmittelbare Schmierung der Lauffläche 18 und/oder 19.

Diese Ausführungsform sowie die vorgenannten Ausführungsformen weisen den Vorteil auf, dass das bisherige Taschenspiel zwischen den Wälzkörpern 16 und den Wälzkörpertaschen 26 gleich gehalten werden kann. Der Käfig 17 ist belastbar und unterliegt keinem Verschleiß des Schmierstoffs, da eine Trennung zwischen der Funktion der Führung der Wälzlager und der Schmierung gegeben ist. Darüber hinaus sind diese Ausführungen nicht bruchempfindlich, da die bisherige Käfigkonstruktion aufrecht erhalten bleiben kann. Zudem erlauben diese feststoffgeschmierten Wälzlager gegenüber dem bisherigen Wälzlager eine höhere Drehzahl.

## Patentansprüche

1. Feststoffgeschmiertes Wälzlager mit einem Innenring (12), einem Außenring (14) und dazwischen gelagerten Wälzkörpern (16) sowie mit zwischen den Wälzkörpern (16) angeordneten Schmierstoffsegmenten (31), wobei die Wälzkörper (16) durch den Käfig (17) zwangsgeführt sind und der Käfig (17) zwischen den Wälzkörpern (16) Aufnahmebereiche (29) zur Aufnahme von zumindest einem Schmierstoffsegment (31) aufweist, die in dem jeweiligen Aufnahmebereich (29) zumindest in einem Freiheitsgrad bewegbar angeordnet sind, **dadurch gekennzeichnet, dass**
- die Schmierstoffsegmente (31) zumindest eine Anlagefläche aufweisen, die den Wälzkörpern (16) zugeordnet ist,
- der Käfig (17) als Kronenkäfig ausgebildet ist und einen U-förmigen Querschnitt mit zueinander beabstandeten Schenkelabschnitten (34) aufweist, in denen Wälzkörpertaschen (26) vorgesehen sind und zwischen den in den Wälzkörpertaschen (26) angeordneten Wälzkörpern (16) Schmierstoffsegmente (31) vorgesehen sind, welche in den U-förmigen Querschnitt einsetzbar sind und
- die Schmierstoffsegmente (31) eine T-förmige Kontur aufweisen, wobei der vertikale Abschnitt der T-förmigen Kontur zwischen den Wälzkörpern (16) angeordnet ist und an diesen anliegt sowie der horizontale Abschnitt der T-förmigen Kontur einem Boden (33) des U-förmigen Querschnitts des Käfigs (17) zugeordnet ist.

2. Wälzlager nach Anspruch 1, **dadurch gekennzeichnet, dass** ein horizontaler Abschnitt der T-förmigen Kontur des Schmierstoffsegments (31) an den Wälzkörpern (16) anliegt und vorzugsweise zwischen dem horizontalen und vertikalen Abschnitt der T-förmigen Kontur des Schmierstoffsegments (31) einen an die Kontur des Wälzlagers angepassten Übergangsbereich umfasst.

3. Wälzlager nach einem der vorhergehenden Ansprüche, **dadurch gekennzeichnet, dass** in jedem Aufnahmebereich (29) zumindest ein Schmierstoffsegment (31) angeordnet ist.

4. Wälzlager nach einem der vorhergehenden Ansprüche, **dadurch gekennzeichnet, dass** das Schmierstoffsegment (31) aus Graphit oder aus MoS₂ besteht.

## Claims

1. A solid-lubricated rolling bearing having an inner ring (12), an outer ring (14), and rolling elements (16) supported therebetween as well as lubricant segments (31) arranged between said rolling elements (16), the rolling elements (16) being restrictedly guided by the cage (17) and the cage (17) having reception areas (29) formed between the rolling elements (16) for receiving at least one lubricant segment (31) arranged in its respective reception area (29) so as to be movable in at least one degree of freedom, **characterised in that**
- the lubricant segments (31) have each at least one contact surface which is associated with the rolling elements (16),
- the cage (17) is formed as a crown cage and has a U-shaped cross-section with leg portions (34) spaced apart from each other in which rolling element pockets (26) are provided, and **in that** the rolling elements (16) disposed in said rolling element pockets (26) have lubricant segments (31) provided therebetween which may be inserted into the U-shaped cross-section, and
- the lubricant segments (31) have a T-shaped contour, the vertical portion of said T-shaped contour being disposed between, and applied to, the rolling elements (16) and the horizontal portion of said T-shaped contour being associated with a bottom (33) of the U-shaped cross-section of the cage (17).

2. The rolling bearing as claimed in claim 1, **characterised in that** a horizontal portion of the T-shaped contour of the lubricant segment (31) is applied to the rolling elements (16) and preferably comprises a transition zone arranged between the horizontal and the vertical portions of the T-shaped contour of the lubricant segment (31) and adapted so as to match the contour of the rolling bearing.

3. The rolling bearing as claimed in any of the preceding claims, **characterised in that** at least one lubricant segment (31) is arranged in each reception area (29).

4. The rolling bearing as claimed in any of the preceding claims, **characterised in that** the lubricant segment (31) consists of graphite or MoS₂.

## Revendications

1. Palier de roulement à lubrifiant solide, avec une bague intérieure (12), une bague extérieure (14) et, disposés entre ces dernières, des corps de roulement (16) ainsi que des segments de lubrifiant disposés entre lesdits corps de roulement (16), les corps de roulement (16) étant soumis par la cage (17) à un guidage forcé et la cage (17) présentant, entre les corps de roulement (16), des zones de réception (29) en vue de recevoir au moins un segment de lubrifiant (31) qui est disposé dans la zone de réception respective (29) de manière à pouvoir bouger au moins selon un degré de liberté, **caractérisé en ce que**
- les segments de lubrifiant (31) présentent au moins une surface d'appui qui est affectée aux corps de roulement (16),
- la cage (17) est réalisée en tant que cage à couronne et présente une section transversale en forme de U dont les parties de branche (34) sont espacées l'une de l'autre et dans lesquelles sont prévues des poches de corps de roulement (26), et **en ce que**, entre lesdits corps de roulement (16) disposés dans les poches de corps de roulement (26) sont prévus des segments de lubrifiant (31) qui peuvent être placés dans la section transversale en forme de U, et
- les segments de lubrifiant (31) présentent un contour en forme de T, la partie verticale du contour en forme de T étant disposée entre les corps de roulement (16) et reposant contre ceux-ci et la partie horizontale du contour en forme de T étant affectée à un fond (33) de la section transversale en forme de U de la cage (17).

2. Palier de roulement selon la revendication 1, **caractérisé en ce qu'**une partie horizontale du contour en forme de T du segment de lubrifiant (31) repose contre les corps de roulement (16) et comprend, de préférence entre la partie horizontale et la partie verticale du contour en forme de T du segment de lubrifiant (31), une zone de transition adaptée au contour du palier de roulement.

3. Palier de roulement selon l'une quelconque des revendications précédentes, **caractérisé en ce qu'**au moins un segment de lubrifiant (31) est disposé dans chaque zone de réception (29).

4. Palier de roulement selon l'une quelconque des revendications précédentes, **caractérisé en ce que** le segment de lubrifiant (31) est en graphite ou en MoS₂.
